# FASCICULE DE BREVET EUROPEEN

(11) **EP 2 438 339 B1**
(45) Date de publication et mention de la délivrance du brevet: **06.03.2013**
(21) Numéro de dépôt: 10734239.6
(22) Date de dépôt: 04.06.2010
(51) Int. Cl.: F16K 99/00

(54) **ORGANE DE CIRCULATION FLUIDIQUE, ET ENSEMBLE DE CIRCULATION FLUIDIQUE COMPRENANT AU MOINS UN TEL ORGANE**
FLUIDZIRKULATIONSORGAN UND VORRICHTUNG MIT EINEM SOLCHEN ORGAN
FLUID CIRCULATION MEMBER AND FLUID CIRCULATION DEVICE USING SUCH A MEMBER

(30) Priorité: 05.06.2009 FR 0953732
(43) Date de publication de la demande: 11.04.2012
(73) Titulaire: Eveon, 38330 Montbonnot Saint Martin (FR); Institut Polytechnique de Grenoble, 38000 Grenoble (FR)
(72) Inventeur: MONTES, Laurent, F-38100 Grenoble (FR); MORFOULI, Panagiota, F-38170 Seyssinet Pariset (FR); PERRIERE, Bernard, F-38130 Echirolles (FR)
(74) Mandataire: Prugneau, Philippe
(86) Numéro de dépôt international: PCT/FR2010/051112
(87) Numéro de publication internationale: WO 2010/139913

(56) Documents cités:
- WO-A1-91/00464
- US-A- 5 058 856
- US-B1- 6 612 535

## Description

### Domaine technique

L'invention concerne un organe de circulation fluidique, ainsi qu'un ensemble de circulation fluidique comprenant au moins un tel organe de circulation fluidique.

Cet organe et cet ensemble de circulation fluidique sont par exemple destinés à équiper un dispositif d'injection et/ou de prélèvement à usage médical tel que décrit dans la demande de brevet français publiée sous le numéro FR 2 909 001. Cependant, ils pourraient aussi être utilisés dans d'autres microsystèmes de contrôle de flux d'un fluide, par exemple pour un système d'impression ou encore un système de chromatographie.

L'invention vise plus particulièrement un organe de circulation fluidique en substrat semi-conducteur à actionnement thermique, comprenant un cadre support et un diaphragme bi-morphe en deux parties superposées couplé au cadre.

### Technique antérieure

Le document de brevet US 5,058,856 révèle les éléments selon le préambule de la revendication 1 et décrit une microvalve qui est équipée d'un tel organe de circulation fluidique. Dans cette microvalve, le diaphragme bimorphe comprend deux parties superposées formées respectivement d'une couche de silicium et d'une couche métallique, ici en nickel, ces deux parties étant séparées par une couche d'oxyde de silicium. Le bord périphérique du diaphragme est ajouré de sorte à former des pattes flexibles espacées radialement couplées au cadre. Les pattes apportent une certaine élasticité radiale au diaphragme et permettent, quand le diaphragme est déformé par chauffage, de déplacer un élément mobile par rapport au cadre.

On connaît aussi du document de brevet EP 0 478 716 une microvalve comprenant un diaphragme dont les deux parties superposées sont formées respectivement d'une couche de silicium et d'une couche d'aluminium séparées par une couche d'oxyde de silicium isolante électriquement. Dans cette microvalve, la couche d'oxyde de silicium est interposée entre les deux parties du diaphragme et forme un bourrelet périphérique servant de charnière. Lorsque le diaphragme est chauffé, il se déforme et pivote autour de la charnière de sorte que l'élément mobile se déplace par rapport au cadre.

De manière générale, la fabrication d'une telle microvalve est effectuée en plusieurs étapes qui consistent d'abord à déposer sur une face d'un substrat en semi-conducteur différentes couches de matériaux pour former le diaphragme bimorphe, ces deux couches de matériaux ayant des coefficients de dilatation thermiques différents, puis à placer des résistances électriques au sein d'une des couches, et enfin à graver par attaque sélective le substrat par l'autre face (opposée à la face où est disposée le diaphragme) pour former l'élément mobile et le cadre. Avec les procédés connus, on observe qu'il subsiste sous le diaphragme entre le cadre et l'élément mobile un disque annulaire en substrat d'une certaine épaisseur de sorte que le diaphragme peut avoir une épaisseur d'au moins une dizaine de micromètres, voire 30 micromètres, ce qui lui confère une certaine rigidité. Par conséquent, pour obtenir une flexibilité suffisante du diaphragme dans les microvalves connues, il est nécessaire de former des pattes flexibles ou des éléments de type charnière sur le bord périphérique du diaphragme, ce qui est complexe et coûteux.

### Exposé de l'invention

Le but de l'invention est de fournir un organe de circulation fluidique, du type précité, qui est très compact et possède une très bonne sensibilité. Le but de l'invention est en particulier de fournir un tel organe de circulation fluidique dont le diaphragme a une faible épaisseur lui conférant une flexibilité suffisante.

A cet effet, l'invention a pour objet un organe de circulation fluidique en substrat semi-conducteur à actionnement thermique, comprenant un cadre support et un diaphragme bi-morphe en deux parties superposées couplé au cadre support, caractérisé en ce qu'une première couche mince d'un matériau d'arrêt pour une attaque sélective du substrat semi-conducteur est posée sur le cadre support et en ce que le diaphragme en deux parties est posé sur une même face de ladite première couche mince.

Grâce à l'invention, on peut obtenir un diaphragme très fin et par conséquent de grande flexibilité, ce qui permet d'une part de s'affranchir du besoin de charnière ou de pattes flexibles et d'autre part d'obtenir une meilleure sensibilité de l'organe de circulation fluidique. En effet, la première couche mince d'arrêt permet d'arrêter automatiquement sur une face du substrat semi-conducteur l'attaque sélective nécessaire pour former le diaphragme. On peut alors déposer sur cette première couche mince, de l'autre côté du substrat semi-conducteur, une seconde couche mince pour former le diaphragme qui peut aussi être très fine.

Un organe de circulation fluidique selon l'invention peut présenter avantageusement les particularités suivantes :
- il comprend en outre un élément mobile, le diaphragme étant couplé au cadre support et à l'élément mobile afin que l'élément mobile soit suspendu au cadre support, la première couche mince étant posée sur le cadre support et l'élément mobile de telle façon que le cadre support et l'élément mobile sont formés en deux parties distinctes du substrat semi-conducteur ;
- il comprend au moins un capteur de mesure ou de détection intégré dans ledit diaphragme ;
- il comprend au moins un circuit électronique de commande ou de mesure, intégré dans ledit diaphragme ;
- ladite couche mince est en oxyde de silicium d'une épaisseur comprise entre environ 0,1 et 4 micromètres, notamment entre 0,1 et 0,4 micromètre, et une seconde couche mince constituant une des deux parties superposées du diaphragme est en silicium ou en métal d'une épaisseur comprise entre environ 0,1 et 15 micromètres, notamment entre 0,1 et 5 micromètres.

Il en résulte que, pour des raisons de symétrie et d'équilibre du diaphragme, toutes les couches du diaphragme ont une épaisseur analogue assez fine, ce qui conduit à un diaphragme très fin compris entre environ 0,8 µm et 30 µm, notamment entre 0,8 µm et 10 µm.

L'invention s'étend encore à un procédé de fabrication d'un organe de circulation fluidique en substrat semi-conducteur à actionnement thermique, comprenant un cadre support et un diaphragme bi-morphe en deux parties superposées couplé au cadre support, selon lequel on dépose ledit diaphragme sur une première face avant d'un substrat semi-conducteur et on forme ledit cadre support par attaque sélective à partir d'une deuxième face arrière dudit substrat semi-conducteur, caractérisé en ce qu'il comprend l'étape consistant à déposer sur ladite première face du substrat semi-conducteur une première couche mince qui constitue une couche d'arrêt pour l'attaque sélective du substrat semi-conducteur, cette première couche mince étant interposée entre la première face du substrat semi-conducteur et une seconde couche mince en un matériau semi-conducteur ou métallique constituant une des deux parties superposées du diaphragme.

Lorsque l'organe comprend un élément mobile, le diaphragme étant couplé au cadre support et à l'élément mobile afin que l'élément mobile soit suspendu au cadre support, on forme avantageusement ledit élément mobile et ledit cadre support par attaque sélective à partir d'une deuxième face arrière dudit substrat semi-conducteur.

Avantageusement, la première couche mince peut être réalisée par dépôt chimique en phase vapeur ou par croissance thermique. La deuxième couche mince peut être réalisée en semi-conducteur par dépôt chimique en phase vapeur ou par collage moléculaire, ou en métal par pulvérisation cathodique ou par évaporation.

L'invention a également pour objet un ensemble de circulation fluidique comprenant au moins une embase, au moins un organe de circulation fluidique tel que ci-dessus, le cadre support du ou de chaque organe de circulation fluidique reposant sur l'embase, au moins un volume intérieur de circulation de fluide, chaque volume intérieur étant défini par un organe de circulation fluidique et une embase correspondants, et au moins un orifice d'admission de fluide dans le volume intérieur, et au moins un orifice d'évacuation de fluide hors de ce volume intérieur.

Selon d'autres caractéristiques de cet ensemble :
- au moins un orifice d'admission/d'évacuation est ménagé dans le cadre support d'au moins un organe de circulation fluidique ;
- au moins un orifice d'admission/d'évacuation est ménagé entre une embase et le cadre support d'un organe de circulation fluidique reposant sur ce substrat semi-conducteur ;
- au moins un orifice d'admission/d'évacuation est ménagé dans l'embase ;
- cet ensemble de circulation fluidique comprend au moins un organe de circulation fluidique pourvu d'un élément mobile propre à obturer, de façon sélective, au moins un premier orifice d'évacuation ;
- cet ensemble de circulation fluidique comprend, outre le premier orifice d'évacuation propre à être obturé par ledit élément mobile, un second orifice d'admission qui n'est pas obturé par cet élément mobile ;
- au moins un orifice d'évacuation présente une géométrie adaptée pour établir un sens d'écoulement privilégié de fluide ;
- les dimensions transversales d'au moins un orifice d'évacuation varient le long de la direction d'écoulement du fluide ;
- les dimensions transversales du premier orifice d'évacuation augmentent à l'opposé du volume intérieur, alors que celles du second orifice d'admission sont sensiblement constantes ;
- l'ensemble de circulation fluidique comprend plusieurs organes de circulation fluidique définissant plusieurs volumes intérieurs, dont au moins deux sont placés en série, en référence à l'écoulement du fluide, l'orifice d'évacuation ou d'admission d'un premier organe de circulation fluidique débouchant dans, ou étant confondu avec, l'orifice d'évacuation ou d'admission d'au moins un organe de circulation fluidique adjacent ;
- l'ensemble de circulation fluidique comprend au moins deux organes de circulation fluidique placés côte à côte d'un même côté de l'embase, ces deux organes de circulation fluidique ayant une partie de leur cadre support en commun ;
- l'ensemble de circulation fluidique comprend au moins deux organes de circulation fluidique placés de part et d'autre de l'embase, les volumes intérieurs de ces deux organes de circulation fluidique étant mis en communication par un orifice d'évacuation/d'admission traversant ménagé dans l'embase, cet orifice traversant formant l'orifice d'admission ou d'évacuation du premier organe de circulation fluidique, ainsi que l'orifice d'évacuation ou d'admission de l'organe de circulation fluidique adjacent ;
- l'ensemble de circulation fluidique comprend, dans le sens d'écoulement du fluide, un organe de circulation fluidique amont pourvu d'un élément mobile, un organe de circulation fluidique intermédiaire et un organe de circulation fluidique aval pourvu d'un élément mobile ;
- l'ensemble de circulation fluidique comprend, dans le sens d'écoulement du fluide, un organe de circulation fluidique amont pourvu d'un élément mobile et un organe de circulation fluidique aval, les dimensions transversales de l'orifice d'évacuation de l'organe de circulation fluidique aval augmentant à l'opposé de son volume intérieur ;
- l'ensemble de circulation fluidique comprend au moins une butée à l'égard du déplacement, dans au moins un sens, du diaphragme appartenant à au moins un organe de circulation fluidique ;
- l'ensemble de circulation fluidique comprend au moins un organe de circulation fluidique pourvu d'un élément mobile, dans lequel une butée, dans un premier sens, est formée par l'élément mobile ;
- une butée, dans le sens opposé, est formée par une paroi s'étendant au-dessus du diaphragme, à l'opposé du volume intérieur.

L'invention a enfin pour objet un dispositif médical d'injection et/ou de prélèvement comprenant au moins un organe de circulation fluidique tel que ci-dessus, et/ou au moins un ensemble de circulation fluidique tel que ci-dessus.

### Présentation sommaire des dessins

La présente invention sera mieux comprise et d'autres avantages apparaîtront à la lecture de la description détaillée de quelques modes de réalisation pris à titre d'exemple nullement limitatifs et illustrés par les dessins annexés dans lesquels :
- la figure 1 est une vue en coupe longitudinale selon l'axe I-I de la figure 3 d'un ensemble de circulation fluidique selon l'invention;
- la figure 2 est une vue schématique en coupe longitudinale selon l'axe I-I de la figure 3 d'un organe de circulation fluidique selon l'invention;
- la figure 3 représente une vue schématique de dessus de l'ensemble de circulation de fluidique selon l'invention ;
- la figure 4 représente schématiquement des étapes du procédé de fabrication d'un organe de circulation fluidique selon l'invention, appartenant à l'ensemble de circulation fluidique des figures précédentes ;
- les figures 5 et 6 sont des vues en coupe, analogues à la figure 1, illustrant deux variantes de réalisation d'un ensemble de circulation fluidique selon l'invention ; et
- les figures 7 à 9 sont des vues schématiques en coupe, analogues à la figure 2, illustrant trois variantes supplémentaires de réalisation d'un ensemble de circulation fluidique selon l'invention.

### Description des modes de réalisation

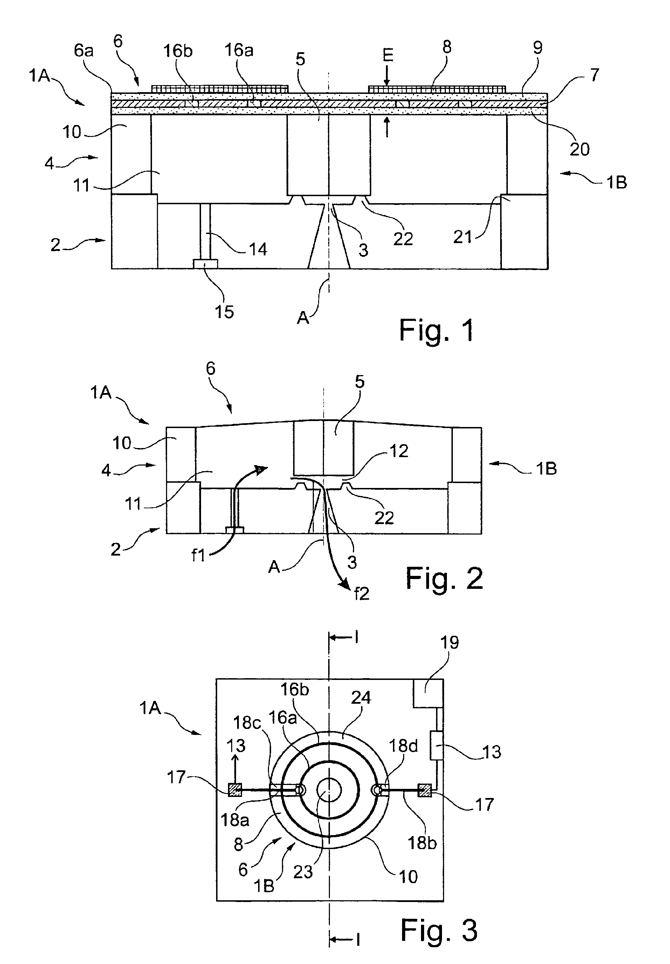

Sur la figure 1, on a représenté un ensemble de circulation fluidique 1A, conforme à l'invention, comprenant un organe de circulation fluidique 1 B, également conforme à l'invention. Cet organe de circulation fluidique 1 B, en substrat semi-conducteur à actionnement thermique, est illustré en coupe selon l'axe I-I de la figure 3. L'ensemble 1A comprend une partie inférieure ou embase 2, en substrat semi-conducteur, définissant un corps globalement étanche, dans lequel est ménagé un orifice d'évacuation 3 traversant. L'orifice d'évacuation 3 résulte ici d'un perçage, par exemple conique, du fond de la partie inférieure 2 de l'ensemble de circulation fluidique 1A. Celui-ci comprend aussi une partie supérieure 4 en substrat semi-conducteur superposée à la partie inférieure 2. Cette partie supérieure 4 forme l'organe de circulation fluidique 1 B.

Le substrat semi-conducteur de la partie supérieure 4 définit un cadre support 10 entourant un élément mobile 5 destiné à obturer ou dégager l'orifice d'évacuation 3 par un mouvement de haut en bas sensiblement perpendiculaire à l'orifice d'évacuation 3 par rapport au cadre support 10. Comme on le verra dans ce qui suit, on peut prévoir que cet élément mobile 5 est optionnel, à savoir que l'organe de circulation fluidique de l'invention en est alors dépourvu. On peut également prévoir que cet élément mobile ne coopère pas avec un orifice d'évacuation, tel celui 3, soit en étant de hauteur réduite, soit en étant décalé par rapport à cet orifice d'évacuation.

L'élément mobile 5 est suspendu au cadre support 10 par un diaphragme 6 bi-morphe dont le bord périphérique 6a repose sur le cadre support 10. De préférence, l'élément mobile 5 est suspendu au diaphragme 6 en regard de l'orifice d'évacuation 3.

Le diaphragme 6 est formé d'au moins deux parties 7, 8 ayant des coefficients de dilatation thermique différents. Le diaphragme 6 comprend en superposition notamment une couche mince inférieure 7 en semi-conducteur ou en métal, par exemple en silicium, une couche mince supérieure 8 en métal ou en matériau conducteur, de préférence annulaire, et une couche mince 9 isolante électriquement interposée entre les deux couches minces inférieure et supérieure 7, 8, par exemple une couche d'oxyde de silicium. A titre de variante, on peut prévoir que la couche mince supérieure 8 est formée en plusieurs éléments et/ou qu'elle ne présente pas une forme d'anneau.

Comme visible sur la figure 1, les deux parties inférieure et supérieure 2 et 4 sont conformées pour définir une cavité ou volume intérieur, formant un réservoir 11 qui est annulaire autour de l'élément mobile 5 et qui est apte à contenir un fluide. La forme de l'ensemble de circulation fluidique 1A (bord périphérique) avec l'organe de circulation fluidique 1B peut être circulaire comme illustré sur la figure 3. On peut imaginer d'autres formes telles que carrée, rectangulaire, hexagonale ou oblongue.

Comme on peut mieux le voir sur la figure 3, un ou plusieurs anneaux faiblement résistifs, formant organes d'actionnement thermique, sont noyés dans la couche mince inférieure 7. Dans l'exemple, on retrouve un anneau intérieur 16a et un anneau extérieur 16b. Ces anneaux intérieur et extérieur 16a, 16b sont reliés à des plots de connexion 17 par des pistes électriquement conductrices 18a, 18b respectives en un métal pour être alimentés en énergie par une unité d'alimentation ou une batterie 19 pilotée par une unité de commande 13, de sorte à chauffer par effet Joule les deux couches minces inférieure et supérieure 7, 8 du diaphragme 6.

On choisira le matériau composant la couche mince supérieure 8 du diaphragme 6 bi-morphe de façon à ce que son coefficient de dilatation thermique soit suffisamment différent de celui du matériau de la couche mince inférieure 7. On choisira de préférence pour la couche mince supérieure 8 un matériau avec un coefficient de dilatation thermique supérieur à celui du matériau de la couche mince inférieure 7, par exemple un métal comme l'aluminium pour la couche mince supérieure 8 et du silicium pour la couche mince inférieure 7. Dans ce cas, la déformation du diaphragme 6 s'effectue vers l'extérieur de l'ensemble de circulation fluidique 1A, à savoir vers le haut, en chauffant la zone adjacente à l'anneau intérieur 16a illustré sur les figures 1 et 3.

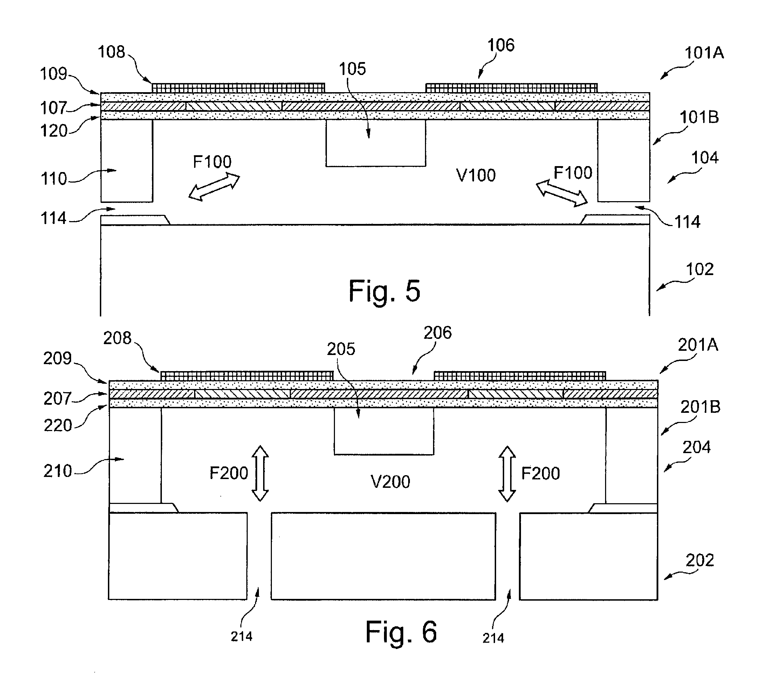

Cependant, si on chauffe la zone adjacente à l'anneau extérieur 16b, ceci a tendance à repousser le diaphragme 6 vers l'intérieur, à savoir vers le bas. Ceci permet d'augmenter l'étanchéité conférée par l'élément mobile 5, de fermer le circuit plus rapidement, et de s'opposer à une contre-pression éventuelle. Etant donné les dimensions de l'élément mobile 5, qui vient en butée dans la position aplatie du diaphragme 6 visible à la figure 1, cette action ne conduit pas à une déformation substantielle du diaphragme 6 vers le bas. Cependant, cette déformation vers le bas peut être sensible dans le cas où l'élément mobile 105 est de hauteur réduite, comme dans les modes de réalisation des figures 5 et suivantes, qui seront décrits ci-après.

En revenant à la figure 1, la couche mince inférieure 7 est avantageusement séparée de l'élément mobile 5 et du cadre support 10 par une couche mince 20 d'un matériau qui sert de couche d'arrêt contre une attaque sélective du substrat en semi-conducteur, par exemple une couche d'arrêt 20 en oxyde de silicium, lequel est isolant électriquement. En outre, la couche mince d'arrêt 20 peut être non conductrice, afin d'assurer une isolation thermique entre le fluide et le diaphragme 6. A titre de variante, on peut prévoir que cette couche mince d'arrêt 20 est réalisée en un matériau diélectrique, notamment en un nitrure.

Grâce à la couche mince d'arrêt 20, on peut déposer la couche mince inférieure 7 très fine et obtenir un diaphragme 6 très fin ce qui lui permet de se déformer suffisamment pour une faible quantité d'énergie et d'apporter ainsi une grande sensibilité à l'organe de circulation fluidique 1B. Par exemple, on peut alimenter cet organe de circulation fluidique 1B selon l'invention avec une tension comprise entre environ quelques millivolts et 50 volts, et un courant compris entre environ quelques milliampères et quelques ampères, et donc une puissance consommée d'environ 0,01 à 10 watts.

Comme visible sur la figure 1, la partie inférieure 2 comporte aussi un ou plusieurs orifices d'admission 14 pour l'entrée du fluide qui sont fermés sélectivement par une ou plusieurs vannes 15 pouvant être pilotées par l'unité de commande 13 (voir figure 3) et permettant au fluide d'entrer dans la cavité 11. En variante, comme on le verra dans ce qui suit, les orifices d'admission 14 et les vannes 15 d'entrée du fluide peuvent aussi être disposés dans la partie supérieure 4.

Comme on peut mieux le voir sur la figure 1, le volume intérieur 11 peut avoir son bord périphérique formé par un épaulement 21 de la partie inférieure 2 de l'ensemble de circulation fluidique 1A. L'élément mobile 5 repose de préférence sur un épaulement circonférentiel 22 délimitant un contour fermé (formant une sorte de nervure) ce qui contribue à une bonne évacuation du fluide en empêchant un phénomène de refoulement du fluide.

Au repos, l'élément mobile 5 repose sur l'épaulement circonférentiel 22 et obture l'orifice d'admission 3. Quand les anneaux 16a, 16b sont traversés par un courant, les couches minces inférieure et supérieure 7, 8 de coefficients de dilatation différents du diaphragme 6 sont chauffées et se dilatent différemment ce qui entraîne une déformation du diaphragme 6 comme montré sur la figure 2. L'élément mobile 5 est alors déplacé selon une direction A sensiblement perpendiculaire au diaphragme 6 indiquée sur la figure 1 pour s'éloigner de l'orifice d'admission 3 et libérer un espace 12 pour la circulation du fluide hors de la cavité 11.

En service, il est avantageux de faire varier à fréquence élevée la configuration du diaphragme 6, entre les deux positions des figures 1 et 2. Ceci permet le pompage du fluide, à savoir sa mise en circulation depuis l'orifice d'évacuation 14 en direction de l'orifice d'admission 3, selon les flèches f1 et f2. On notera que les dimensions transversales de l'orifice d'admission 3 varient le long de la direction d'écoulement du fluide, en l'occurrence qu'elles augmentent à l'opposé du volume intérieur 11. Le profil évasé de l'orifice d'admission 3 constitue une géométrie adaptée pour permettre l'écoulement privilégié du fluide, selon le sens matérialisé par ces deux flèches f1 et f2.

En variante non représentée, cette mise en circulation, dans le sens de la figure 2, peut être réalisée en utilisant un orifice d'admission 3 de section constante, et un orifice d'évacuation 14 dont les dimensions diminuent à l'opposé du volume intérieur. De plus, on peut inverser ce sens de circulation, soit en combinant un orifice d'évacuation 14 droit et un orifice d'admission 3 dont les dimensions diminuent à l'opposé du volume intérieur, soit en combinant un orifice d'admission 3 droit et un orifice d'évacuation 14 dont les dimensions augmentent à l'opposé du volume intérieur.

Comme on le verra dans ce qui suit, l'écoulement peut être réversible, à savoir s'opérer indifféremment dans un sens ou dans l'autre. Pour ce faire, il s'agit d'adapter de façon appropriée le profil des orifices d'admission et/ou d'évacuation et/ou le pilotage de l'ensemble de circulation.

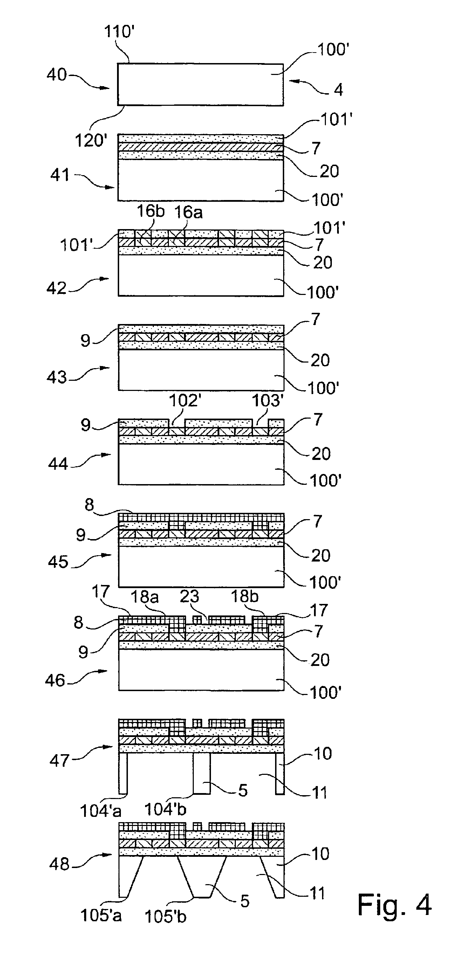

Le procédé de fabrication selon l'invention de l'organe de circulation fluidique 1 B sera maintenant décrit en référence à la figure 4 qui montre des états de réalisation successifs de cet organe de circulation fluidique 1 B. Dans ce procédé, on utilise des procédés de photolithographie standards utilisant des masques successifs pour réaliser l'organe de circulation fluidique 1 B. Avantageusement, le procédé selon l'invention utilise seulement quatre masques successifs, ce qui réduit le temps de fabrication et donc le coût de réalisation de l'organe de circulation fluidique 1 B.

On comprendra que seules des étapes principales du procédé seront ici décrites, d'autres étapes intermédiaires classiquement réalisées dans des procédés de photolithographie, comme le dépôt de résine, l'alignement ou autres étapes analogues, étant connues en tant que telles. Toutes les étapes de photolithographie décrites ci-dessous utilisent de préférence une résine photosensible positive permettant d'atteindre une bonne résolution, mais on pourra aussi adapter le procédé pour utiliser une résine négative standard. L'épaisseur de la résine photosensible utilisée pour réaliser les attaques sélectives est d'environ 1 µm, sauf pour une dernière étape d'attaque sélective du procédé qui sera précisée plus bas.

Pour fabriquer l'organe de circulation fluidique 1B, on commence par nettoyer un substrat 100' en matériau semi-conducteur selon des techniques de salle blanche standards, ce qui amène l'organe de circulation fluidique 1 B dans l'état 40. On pourra par exemple choisir une plaquette de silicium, par exemple de type dopé p.

Puis, on ajoute sur une première face avant 110' du substrat 100' semi-conducteur successivement la couche d'arrêt 20 en oxyde de silicium ou SiO₂, la couche mince inférieure 7 du diaphragme 6 bi-morphe et une couche 101' d'oxyde de silicium sacrificielle. On peut par exemple faire croître la couche mince d'arrêt 20 par croissance thermique ou la déposer par dépôt chimique en phase vapeur (ou CVD pour l'anglais « Chemical Vapor Déposition »). La couche mince inférieure 7 peut être réalisée en semiconducteur par dépôt chimique en phase vapeur (par exemple en silicium polycristallin ou polysilicium) ou par collage moléculaire (en silicium monocristallin), ou en métal par pulvérisation cathodique ou par évaporation, par exemple en aluminium. La couche 101' d'oxyde de silicium sacrificielle peut être réalisée par exemple par croissance thermique ou par dépôt chimique en phase vapeur. L'organe de circulation fluidique 1 B se trouve alors dans l'état 41.

Avantageusement, la couche mince d'arrêt 20 réalisée à cette étape peut être très fine, c'est-à-dire inférieure à 1 µm, et de préférence d'une épaisseur comprise entre 0,1 µm et 0,4 µm. Par conséquent, la couche mince inférieure 7 peut aussi être fine, comprise entre environ 0,1 µm et 1 µm, voire 5 µm, et de préférence d'environ 0,3 µm. La couche 101' d'oxyde sacrificiel a par exemple une épaisseur d'environ 50 nanomètres.

On réalise ensuite une implantation ionique à travers la couche 101' d'oxyde sacrificielle à travers un premier masque adapté pour former les deux anneaux intérieur et extérieur 16a, 16b faiblement résistifs et l'organe de circulation fluidique 1B se trouve alors dans l'état indiqué par 42. On comprendra que les ions s'implantent dans la couche mince inférieure 7 de silicium et dans la couche 101' d'oxyde sacrificielle. Après l'implantation, la couche 101' d'oxyde sacrificielle est retirée par des techniques standards, puis on réalise un recuit de sorte à obtenir un profil d'implantation uniforme. On pourra prendre, pour une implantation optimale, des ions phosphore ou bore à une concentration d'au moins 10¹⁹ cm⁻³ et une énergie d'accélération d'environ 70 kiloélectron-volt (KeV).

Puis, on dépose, par dépôt chimique en phase vapeur, sur la couche mince inférieure 7 incluant les anneaux intérieur et extérieur 16a, 16b, la couche 9 d'oxyde de silicium (SiO₂) et on amène l'organe de circulation fluidique 1 B dans l'état 43. De la même manière que la couche mince inférieure 7, la couche 9 de SiO₂ peut être fine, l'épaisseur de la couche 9 de SiO₂ pouvant être comprise entre environ 0,1 µm et 1 µm et de préférence d'environ 0,2 µm. Cette couche 9 de SiO₂ permet en outre d'absorber des contraintes qui apparaissent dans le diaphragme 6 lors de la formation de la cavité 11 décrite ci-dessous, et d'obtenir ainsi un diaphragme 6 quasi plan.

On réalise alors une attaque de la couche 9 de SiO₂ pour former, à travers un deuxième masque adapté, des ouvertures 102', 103' aussi appelées « vias », chaque via 102', 103' formant un accès à un anneau intérieur et extérieur 16a,16b faiblement résistif à travers la couche 9 de SiO₂. L'organe de circulation fluidique 1 B se trouve alors dans l'état indiqué par 44.

On dépose ensuite sur la couche 9 de SiO₂ la couche mince supérieure 8 du diaphragme 6 bi-morphe qui s'insère dans les vias 102',103' dans la couche 9 de SiO₂ jusqu'à parvenir aux anneaux intérieur et extérieur 16a, 16b faiblement résistifs de sorte à former une connexion électrique avec les anneaux intérieur et extérieur 16a,16b faiblement résistifs. L'organe de circulation fluidique 1B se trouve alors dans l'état 45.

La couche mince supérieure 8 a de préférence une épaisseur comprise entre environ 0,5 µm et 4 µm. On choisira de préférence comme métal l'aluminium pour sa simplicité et son faible coût, mais on pourrait aussi réaliser le diaphragme 6 avec un autre matériau métallique ou semi-conducteur fortement dopé, de l'or ou du nickel par exemple, en adaptant les épaisseurs des couches mince inférieure et supérieure 7, 8 du diaphragme 6 en fonction du coefficient de dilatation thermique du matériau choisi.

Puis, on réalise une attaque sélective classique de la couche mince supérieure 8 à travers un troisième masque adapté pour former, comme cela est mieux visible sur la figure 3, des plots de connexion 17 et des pistes de connexion 18a, 18b dont chacune relie un plot de connexion 17 à un anneau intérieur, extérieur 16a, 16b faiblement résistif. On réalise aussi simultanément une séparation des anneaux intérieur et extérieur 16a, 16b par des trouées 18c, 18d formées dans la couche mince supérieure 8 autour des pistes de connexion 18a, 18b, visibles sur la figure 3. De préférence, on forme aussi par cette attaque sélective un évidement 23 circulaire central de la couche mince supérieure 8 qui devient un anneau. L'évidement 23 permet avantageusement de réduire le poids du diaphragme 6 et de limiter les échanges électriques ou thermiques sur le diaphragme 6. L'organe de circulation fluidique 1 B se trouve alors dans l'état 46.

Enfin, on réalise une attaque sélective partielle du substrat 100' semi-conducteur de silicium, à travers un quatrième masque adapté, par une deuxième face arrière 120' du substrat 100' semi-conducteur de silicium, c'est-à-dire la face opposée à la première face avant 110' sur laquelle on a déposé les couches formant le diaphragme 6, pour creuser la cavité 11 dans le silicium, former le cadre support 10 et l'élément mobile 5 central et dégager ainsi le diaphragme 6. Dans le cas où l'organe de circulation fluidique 1 B conforme à l'invention est dépourvu d'élément mobile, l'étape ci-dessus conduit uniquement à la formation du cadre support 10.

L'épaisseur de la résine photosensible utilisée pour réaliser l'attaque sélective est ici d'environ 10 micromètres. Cette attaque peut aussi en variante être réalisée à travers un masque dur en aluminium. A ce stade, on a réalisé le cadre support 10 et, éventuellement, l'élément mobile 5 en deux parties distinctes du substrat 100' semi-conducteur.

L'attaque sélective est ici de préférence une gravure sèche ou attaque plasma anisotrope, qui utilise par exemple des techniques DRIE (pour l'anglais « Deep Reactive Ion Etching », gravure ionique réactive profonde), et qui amène l'organe de circulation fluidique 1 B ou microvalve dans l'état 47 avec le cadre support 10 et l'élément mobile 5 avec des bords à angles droits 104'a et 104'b.

En variante, on peut aussi réaliser une gravure humide isotrope, avec par exemple du KOH, qui permet d'amener l'organe de circulation fluidique 1 B dans l'état 48 avec le cadre support 10 et l'élément mobile 5 comprenant des bords chanfreinés 105'a, 105'b comme représenté sur la figure 1. Un avantage de cette technique de gravure humide est son faible coût par rapport à la technique de gravure sèche.

Une telle attaque (gravure sèche ou humide) creuse le substrat 100' semi-conducteur de silicium depuis la deuxième face arrière 120', en direction de la première face 110', aux endroits permis par le masque de manière connue, et se poursuit sur toute l'épaisseur du substrat 100' semi-conducteur de silicium jusqu'à la couche d'arrêt 20 en oxyde de silicium qui arrête l'attaque sélectivement. De cette manière, on obtient un diaphragme 6 de fine épaisseur composé seulement de la couche d'arrêt 20, de la couche mince inférieure 7, de la couche 9 de SiO₂, et de la couche mince supérieure 8 et supporté par le cadre support 10 sans qu'il ne soit nécessaire de contrôler précisément l'arrêt de l'attaque. Un tel diaphragme 6 a une épaisseur E indiquée sur la figure 1 comprise typiquement entre environ 0,8 µm et 10 µm.

La partie inférieure 2 de l'ensemble de circulation fluidique 1A peut être réalisée par des techniques similaires, par attaque sélective d'une plaquette de silicium par exemple. Puis, la partie supérieure 4 est assemblée sur la partie inférieure 2, par exemple par collage moléculaire ou toute autre technique d'assemblage connue, afin d'obtenir l'ensemble de circulation fluidique 1A représenté sur la figure 1.

Avantageusement, on pourra prévoir d'intégrer dans l'ensemble de circulation fluidique 1A, et de préférence dans l'organe de circulation fluidique 1 B, et de préférence au sein du diaphragme 6, un ou plusieurs capteurs 24, qui peuvent être de différents types. A titre d'exemple non limitatif, on citera les capteurs de température, de pression, des capteurs permettant de mesurer la déformation du diaphragme, ou encore des capteurs permettant de mesurer la présence de fluide, le débit de ce fluide, sa viscosité, ou encore la présence d'une bulle dans ce fluide et, de façon plus générale, toute caractéristique physico-chimique de ce fluide.

On pourra par exemple adapter un ou plusieurs masques utilisés pour la fabrication de l'organe de circulation fluidique 1 B pour intégrer ces capteurs dans la micropompe. On peut par exemple adapter le troisième masque pour former au sein de la couche mince supérieure 8 de métal des pistes et des plots (non montrées) formant un capteur de température. De tels capteurs 24 permettent de piloter l'ensemble de circulation fluidique 1A et notamment d'asservir le débit de l'ensemble de circulation fluidique 1A en fonction de la température, de la pression, ou de la présence de fluide dans la cavité 11. L'intégration des capteurs 24 au sein même de l'ensemble de circulation fluidique 1A permet de les piloter en temps réel par l'intermédiaire de l'unité de commande 13. Ceci apporte une sécurité pour l'utilisation de l'ensemble de circulation fluidique 1A, ce qui est important notamment dans le domaine médical. En outre, l'intégration des capteurs 24 dans l'ensemble de circulation fluidique 1 A permet de s'affranchir de la présence de capteurs externes et donc de tout décalage des mesures par les capteurs 24, et permet en outre de réduire le coût de réalisation de l'ensemble de circulation fluidique 1A.

Un autre avantage de l'organe de circulation fluidique 1 B selon l'invention est que la fabrication du diaphragme 6 est compatible avec la technologie microélectronique, par exemple MOS (pour l'anglais «metal oxide semiconductor »), et donc on peut prévoir d'embarquer des capteurs de référence et/ou des composants électroniques, par exemple des composants de l'unité de commande 13, au sein du diaphragme 6 pour commander les mouvements de l'organe de circulation fluidique 1 B en fonction des capteurs 24, et ainsi réduire considérablement la taille de l'ensemble de circulation fluidique 1A.

La partie inférieure 2 de l'ensemble de circulation fluidique 1 A peut être réalisée en silicium mais aussi en tout autre matériau adapté. La partie supérieure 4 de l'ensemble de circulation fluidique 1A peut être réalisée en silicium, en polysilicium ou en métal, mais aussi en substrat SOI (silicium sur isolant, pour l'anglais « silicon on insulator ») qui permet d'obtenir une sensibilité encore meilleure des capteurs insérés dans l'ensemble de circulation fluidique 1A. Lors du procédé de fabrication de l'organe de circulation fluidique 1 B à partir d'un substrat SOI, on comprendra que, après nettoyage approprié du substrat SOI, on commence la fabrication directement par l'implantation ionique et l'organe de circulation fluidique 1 B se trouve dans l'état indiqué par 42 sur la figure 4, puis la fabrication se poursuit comme décrit ci-dessus.

Des calculs ont montré qu'il est possible de réaliser un organe de circulation fluidique 1 B de dimensions comprises entre 20µm et 20mm. Des essais ont permis de réaliser un organe de circulation fluidique 1 B de quelques millimètres, par exemple avec un diamètre de 2 à 4 mm et un espace entre l'élément mobile 5 et le cadre 10 d'environ 1,5 mm dans le cas d'une attaque sèche (état 47 de la figure 5), et d'environ 0,8 mm dans le cas d'une attaque humide (état 48 de la figure 5).

Avec un ensemble de circulation fluidique 1A selon l'invention qui présente un encombrement d'environ 30 mm², on peut obtenir un débit volumétrique allant jusqu'à environ quelques dizaines de microlitres par minute et une pression dans la cavité 11 allant jusqu'à environ 120 kilopascals (soit environ 1,2 atm), pour une tension d'environ 5 volts.

L'organe de circulation fluidique 1 B selon l'invention peut être incorporé dans un ensemble de circulation de circulation fluidique 1 A pour un dispositif d'injection et/ou de prélèvement sans piston à usage médical, et notamment un dispositif d'injection et/ou de prélèvement miniaturisé du type seringue, patch ou implant.

Les figures 5 et 6 illustrent deux premières variantes de réalisation de l'invention. Sur ces figures, les éléments mécaniques analogues à ceux de la figure 1 y sont affectés des mêmes numéros de référence, augmentés respectivement de 100 et 200.

L'ensemble de circulation fluidique 101A de la figure 5 diffère de celui 1A, tout d'abord en ce que l'élément mobile 105 présente une hauteur plus faible que celle de l'élément mobile 5, de sorte que cet élément mobile 105 ne peut venir au contact de l'embase 102, dans une position non déformée du diaphragme 106. Etant donné les dimensions réduites de cet élément mobile 105, le diaphragme 106 peut être déformé vers le bas, moyennant un chauffage adéquat de ses éléments d'actionnement thermique, comme explicité ci-dessus en référence aux figures 1 et 3. La présence de cet élément mobile 105 constitue alors une butée à l'égard du déplacement du diaphragme 106 vers le bas, tout en améliorant la rigidité de l'ensemble de ce diaphragme 106. A titre de variante, cet élément mobile 105 pourrait être totalement absent.

A titre de variante supplémentaire, on peut prévoir que la face supérieure du diaphragme est surmontée d'une paroi non représentée, qui peut alors constituer une butée à l'égard du déplacement du diaphragme vers le haut. L'utilisation d'une butée haute et/ou d'une butée basse est tout particulièrement avantageuse, car cela permet de contrôler le déplacement de manière géométrique, en s'affranchissant presque totalement des paramètres de pression externe à l'organe et des dispersions de fabrication.

On notera que de telles butées peuvent équiper un organe de circulation dépourvu de couche mince d'arrêt, au sens de l'invention. Ainsi, ces butées peuvent être associées à tout type d'organe de circulation fluidique en semi-conducteur à actionnement thermique, comprenant un cadre support et un diaphragme bi-morphe en deux parties superposées couplé au cadre.

De plus, l'embase 102 n'est pas creusée d'orifice traversant, mais le volume intérieur V100 est associé à deux orifices d'admission/d'évacuation 114 traversant ménagés latéralement dans le cadre support 110. A titre de variante, ces orifices traversant peuvent être ménagés à l'interface entre le cadre support et l'embase. On notera que, contrairement à l'orifice d'admission 3, ces deux orifices d'admission/d'évacuation 114 présentent une dimension transversale sensiblement constante.

L'ensemble de circulation fluidique 201A de la figure 6 est globalement analogue à celui 101A de la figure 5. Cependant, ses deux orifices d'admission/d'évacuation 214 traversant sont creusés, non pas dans le cadre support 210, mais axialement au travers de l'embase 202. De plus, ces deux orifices d'admission/d'évacuation 214 présentent également une dimension transversale sensiblement constante.

En service, le déplacement des diaphragmes 106 ou 206 induit une modification des volumes intérieurs V100 et V200, laquelle génère le déplacement du fluide. Cependant, il n'existe pas de sens privilégié à cet écoulement, contrairement au premier mode de réalisation.

On notera d'ailleurs que chacun des deux orifices d'admission/d'évacuation 114 ou 214 peut indifféremment constituer une entrée ou une sortie pour le fluide, ce qui est matérialisé par les doubles flèches F100 et F200. Néanmoins, on peut prévoir de privilégier un sens d'écoulement, comme dans le mode de réalisation des figures 1 à 3. Il s'agit à cet effet de modifier, de façon appropriée, le profil d'au moins un des orifices d'admission/d'évacuation 114 ou 214 ci-dessus.

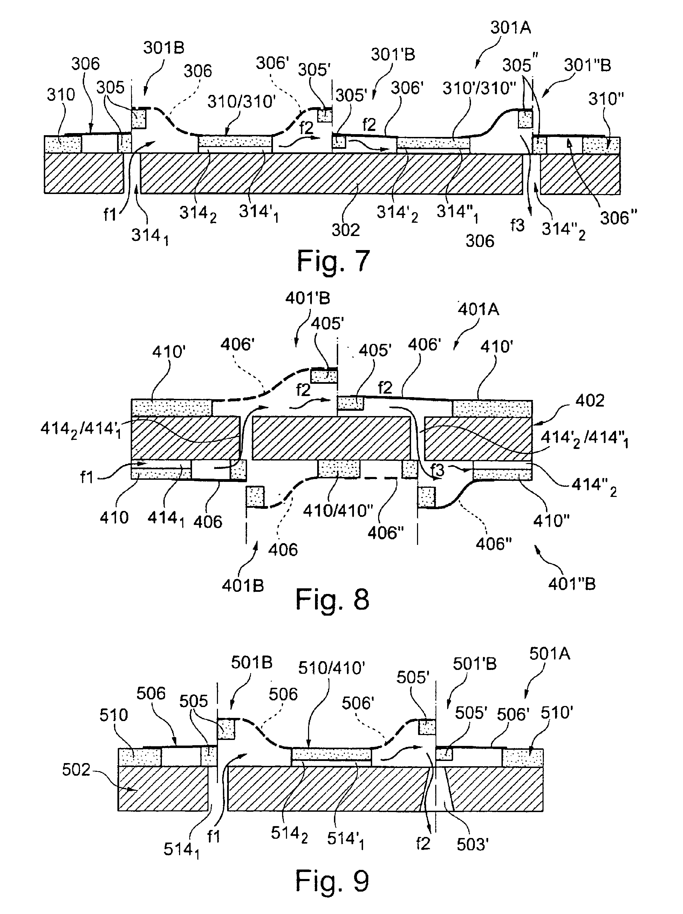

Les figures 7 à 9 illustrent trois autres variantes de réalisation de l'invention. Sur ces figures, les éléments mécaniques analogues à ceux de la figure 1 y sont affectés des mêmes numéros de référence, augmentés respectivement de 300, 400 et 500.

L'ensemble de circulation fluidique 301A, illustré sur la figure 7, comprend une embase unique 302 supportant trois organes de circulation fluidique 301 B, 301'B et 301"B placés en série. Le premier 301B de ces organes de circulation fluidique comprend un cadre support 310, sur lequel repose un diaphragme 306 associé à un élément mobile 305. Ce dernier possède des dimensions telles qu'il peut obturer sélectivement un orifice d'admission 314₁ ménagé dans l'embase302, dont les dimensions transversales sont constantes. Par ailleurs, le cadre support 310 définit, avec l'embase 302, un orifice d'évacuation 314_{2.}

Le second organe de circulation fluidique 301'B comprend un cadre support 310', dont une partie est commune avec celui 310 décrit ci-dessus. Dans ces conditions le premier orifice d'admission 314'₁, associé à ce cadre support 310' intermédiaire, est confondu avec celui d'évacuation 314₂ du premier organe de circulation fluidique 301B. Le cadre support 310' supporte un diaphragme 306' associé à un élément mobile 305' de plus faibles dimensions, à savoir qu'il est toujours distant de l'embase 302, dans la position non déformée du diaphragme 306'. Enfin, à l'opposé de l'orifice d'admission 314'₁, le cadre support 310' est creusé d'un second orifice d'évacuation 314'₂.

Le troisième organe de circulation fluidique 301"B est symétrique de celui 301 B, par rapport à un axe vertical médian. On retrouve ainsi un cadre support 310", dont une partie est commune avec le cadre support 310' intermédiaire, creusé d'un premier orifice d'admission 314"₁ commun avec celui d'évacuation 314'₂. Par ailleurs, l'élément mobile 305" porté par le diaphragme 306" peut obturer un second orifice d'évacuation 314"₂, traversant l'embase 302.

La mise en oeuvre de cet ensemble de circulation fluidique 301A est illustrée en référence à la figure 7, sur laquelle la position basse de chaque diaphragme 306, 306', 306" est représentée en traits pleins et sa position haute en traits pointillés.

Au départ, les diaphragmes 306, 306', 306" sont en position aplatie, à savoir notamment que l'élément mobile 305 obture l'orifice d'admission 314₁, ce qui correspond à un circuit fermé. Puis, on actionne l'organe de circulation fluidique 301B de façon à soulever son diaphragme 306, ce qui autorise l'admission du fluide via l'orifice d'admission 314₁ (voir flèche f1). On actionne en outre l'organe de circulation fluidique 301'B de façon à soulever également son diaphragme 306', ce qui induit un déplacement du fluide au travers des orifices 314₂ et 314'₁ (voir flèches f2). Cependant le diaphragme 306" du troisième organe de circulation fluidique 301"B reste en position basse, de sorte que le fluide n'est pas évacué hors de l'orifice d'évacuation 314"₂.

Enfin, on rabaisse le premier diaphragme 306 de sorte que l'élément mobile 305 obture à nouveau l'orifice d'admission 314₁, puis on abaisse le diaphragme 306' en même temps qu'on élève le troisième diaphragme 306". Dans ces conditions, ceci permet le refoulement du fluide hors de l'ensemble de circulation fluidique 301 A, via les orifices 314'₂ et d'évacuation 314"₂ (voir flèche f3). Une fois cette opération de refoulement terminée, cet ensemble de circulation fluidique 301 A retrouve sa position initiale.

Comme cela ressort de ce qui précède, les premier et troisième organes de circulation 301B et 301"B assurent une fonction de valve dite statique. En effet, chacun possède un élément mobile 305 et 305" susceptible de former un clapet, à savoir d'obturer ou de libérer un orifice d'admission 314₁ et d'évacuation 314"₂ correspondant. En revanche, notamment du fait de la section de ces orifices d'admission 314₁ et d'évacuation 314"₂, ces valves ne provoquent pas un écoulement de fluide selon une direction privilégiée. L'association des trois organes de circulation fluidique 301 B, 301'B et 301"B assure une fonction de pompe, laquelle peut être réversible.

L'Homme du métier pourra apporter différentes modifications, aux agencements des figures 5 et 6. Ainsi il pourra notamment modifier le profil d'au moins un orifice d'admission et/ou d'évacuation, afin de privilégier l'écoulement dans un sens souhaité. La nature de ces modifications dépendra alors entre autres de l'amplitude voulue de la dissymétrie entre les pertes de charge, de la nature du fluide et des contraintes de fabrication.

L'ensemble de circulation fluidique 401A de la figure 8 diffère de celui 301A, en ce que l'organe intermédiaire 401'B est placé d'un premier côté de l'embase 402, alors que les organes de circulation fluidique respectivement amont 401B et aval 401"B sont placés du côté opposé. Dans ces conditions, l'orifice d'admission 414₁ d'entrée de l'organe de circulation fluidique amont 401B est défini latéralement à travers le cadre support 410, alors que son orifice d'évacuation 414₂, commun avec l'orifice d'admission 414'₁ d'entrée de l'organe de circulation fluidique 401'B intermédiaire, est creusé à travers l'embase 402. De plus, l'orifice d'évacuation 414'₂ de cet organe de circulation fluidique 401'B intermédiaire, commun avec l'orifice d'admission 414"₁ de l'organe de circulation fluidique aval 401"B, est creusé à travers l'embase 402 alors que l'orifice d'évacuation 414"₂ de cet organe de circulation fluidique aval 401"B est défini latéralement à travers son cadre support 410".

La mise en oeuvre de l'ensemble de circulation fluidique 401 A est analogue à celle de l'ensemble de circulation fluidique 301A, décrite ci-dessus. A des fins de clarté, on a représenté sur la figure 8 les mêmes flèches f1 à f3, que celles portées sur la figure 7.

L'ensemble de circulation fluidique 501A de la figure 9 diffère de ceux 301 A et 401A, en ce qu'il comprend uniquement deux organes de circulation fluidique 501 B, 501'B, dont l'un 501B est dit amont et l'autre 501'B est dit aval. Le premier organe de circulation fluidique 501B amont est identique à celui 301 B, à savoir qu'il comprend un cadre support 510, sur lequel repose un diaphragme 506 associé à un élément mobile 505. Ce dernier possède des dimensions telles qu'il peut obturer sélectivement un orifice d'admission 514₁ ménagé dans l'embase 502, dont les dimensions transversales sont constantes. Par ailleurs, le cadre support 510 définit, avec l'embase 502, un orifice d'évacuation 514₂.

Le second organe de circulation fluidique 501'B aval, qui est similaire à celui 301'B, diffère cependant de ce dernier en ce que son orifice d'évacuation 503' est creusé, non pas latéralement, mais axialement à travers l'embase 502. De plus, cet orifice d'évacuation 503' est à rapprocher de celui 3 de la figure 1, à savoir qu'il présente des dimensions transversales qui augmentent à l'opposé du volume intérieur de cet organe de circulation fluidique 501'B aval.

Par ailleurs, l'élément mobile 505' présente des dimensions réduites, comme par exemple celui 305' ou 405', de sorte qu'il ne peut obturer l'orifice d'évacuation 503' dans la position non déformée du diaphragme 506. Enfin l'orifice d'admission 514'₁ de ce second organe de circulation fluidique 501'B aval, ménagé dans le cadre support 510', est confondu avec l'orifice d'évacuation 514₂ du premier organe de circulation fluidique 501 B amont, comme dans le mode de réalisation de la figure 7.

La mise en oeuvre de cet ensemble de circulation fluidique 501A est illustrée en référence à la figure 9, sur laquelle la position basse de chaque diaphragme 506 est représentée en traits pleins et sa position haute en traits pointillés. Au départ, les diaphragmes 506, 506' sont en position aplatie, à savoir notamment que l'élément mobile 505 obture l'orifice d'admission 514₁, ce qui correspond à un circuit fermé. De plus l'organe de circulation fluidique 501 B amont, qui constitue une valve statique au sens donné ci-dessus, assure également une fonction d'anti-retour.

Puis, on actionne l'organe de circulation fluidique 501B amont de façon à soulever son diaphragme 506, ce qui autorise l'admission du fluide via l'orifice d'admission 314₁ (voir flèche f1). Cet organe de circulation fluidique 501 B amont reste dans cette position dite ouverte, durant l'ensemble de la phase de pompage décrite ci-après.

On actionne en outre l'organe de circulation fluidique 501'B aval, de façon à le faire osciller entre ses deux positions respectivement haute et basse. Durant cette phase de pompage, le profil évasé de l'orifice d'évacuation 503' assure la dissymétrie des pertes de charge, afin d'assurer l'écoulement de fluide, selon la flèche f2. Au terme de cette étape de pompage, on referme le circuit en plaçant à nouveau l'organe de circulation fluidique 501 B amont dans sa position de repos.

Comme cela ressort de ce qui précède, le premier organe de circulation fluidique 501 B amont assure une fonction de valve statique, comme notamment ceux 301 B et 301 "B décrits ci-dessus. En outre, le second organe de circulation fluidique 501'B aval assure non seulement une fonction de pompe, comme ceux 301'B et 401'B, mais également une fonction supplémentaire de valve dynamique. Ainsi, étant donné le profil de l'orifice d'évacuation 503', l'écoulement de fluide possède un sens privilégié, correspondant à un refoulement.

Ce mode de réalisation est tout particulièrement avantageux, lorsque la contrepression au refoulement est relativement faible. Il permet d'utiliser par exemple au repos les capteurs du diaphragme 506' de la pompe, afin de mesurer la pression statique. On notera que le sens de circulation du fluide peut être inversé, en prévoyant un orifice d'évacuation 503' qui s'évase, non pas à l'opposé de l'embase 502 comme sur la figure 9, mais au contraire en direction de l'embase 502. De plus, l'Homme du métier peut prévoir de modifier le profil d'un orifice supplémentaire, autre que celui 503', afin d'accentuer la dissymétrie entre les pertes de charge.

En faisant à nouveau référence aux figures 1 à 3, il est à souligner que le premier mode de réalisation est tout particulièrement avantageux, en termes de compacité. En effet il intègre, dans un ensemble de circulation fluidique 1A comprenant un unique organe de circulation fluidique 1 B, les différentes fonctions décrites ci-dessus.

Ainsi, cet organe de circulation fluidique 1 B assure tout d'abord une fonction de pompe, puisqu'il contribue à la mise en circulation du fluide. De plus, au repos, il forme une valve anti-retour. Enfin, durant la phase de pompage, l'orifice d'évacuation 3 favorise un écoulement dans un sens privilégié, à savoir une fonction de valve dynamique selon la définition donnée ci-dessus.

L'invention n'est pas limitée aux exemples décrits et représentés. Ainsi, l'ensemble de circulation fluidique des figures précédentes peut être de type normalement ouvert. Afin de le rendre normalement fermé, on peut prévoir différents arrangements non illustrés, bien connus de l'Homme du métier.

On peut tout d'abord modifier la valeur de la pression exercée sur la face supérieure du diaphragme 6, par exemple en mettant en communication par le fluide, soit la cavité 11, soit l'orifice d'évacuation 3 avec le dessus du diaphragme 6, en créant alors une nouvelle cavité fermée au-dessus du diaphragme 6. On peut également prévoir de rehausser l'épaulement 22. Enfin on peut exercer, sur le diaphragme 6, un effort dirigé vers le bas.

Dans les exemples de réalisation des figures 7 à 9, les ensembles de circulation fluidique 301A, 401A, 501A comprennent des organes de circulation 301 B, 301 B', 301B" ; 401 B, 401'B, 401"B ; 501 B, 501'B qui sont tous placés en série les uns avec les autres. On peut cependant aussi prévoir des agencements de type hybride, dans lesquels un même substrat supporte au moins deux groupes d'organes de circulation, qui sont placés en parallèle les uns des autres, alors que les organes de circulation d'un même groupe sont disposés en série. Ces groupes peuvent être placés sur une même face du substrat, ou bien de part et d'autre de ce dernier. Ces deux groupes peuvent par exemple assurer la circulation de fluides différents, qui proviennent de sources respectives, ou doivent être dirigés vers des circuits aval respectifs, ou bien encore doivent être mélangés en aval

De plus, les différents organes de circulation peuvent être implantés sur le substrat à des emplacements différents de ceux illustré sur les figures 7 à 9. En particulier, on peut prévoir de disposer ces organes de façon appropriée, en fonction de leur taille optimale individuelle respective, en vue d'un encombrement global ou d'un coût de fabrication le plus faible possible.

## Revendications

1. Organe de circulation fluidique (1B ; 101B ; 201 B ; 301 B, 301 B', 301B" ; 401 B, 401'B, 401"B ; 501 B, 501'B) en substrat (100') semi-conducteur à actionnement thermique, comprenant un cadre support (10;110 ; 210 ; 310, 310', 310" ; 401, 410', 410" ; 510, 510') et un diaphragme (6 ; 106 ; 206 ; 306, 306', 306"; 406, 406', 506, 506') bi-morphe en deux parties (7, 8 ; 107, 108; 207, 208) superposées couplé au cadre support (10 ; 110; 210 ; 310, 310', 310" ; 401, 410', 410" ; 510, 510'), **caractérisé en ce qu'**une première couche mince (20 ; 120 ; 220) d'un matériau d'arrêt pour une attaque sélective dudit substrat (100') semi-conducteur est posée sur ledit cadre support (10; 110 ; 210 ; 310, 310', 310" ; 401, 410', 410" ; 510, 510') et **en ce que** ledit diaphragme (6 ; 106 ; 206 ; 306 ; 306', 306" ; 406, 406', 506, 506') en deux parties (7, 8 ; 107, 108 ; 207, 208) est posé sur une même face de ladite première couche mince (20 ; 120 ; 220).

2. Organe de circulation fluidique (1B ; 101B ; 201B ; 301 B, 301 B', 301B" ; 401 B, 401'B, 401"B ; 501 B, 501'B) selon la revendication 1, **caractérisé en ce qu'**il comprend en outre un élément mobile (5 ; 105 ; 205 ; 305, 305', 305" ; 405'; 505, 505'), ledit diaphragme (6; 106 ; 206; 306; 306', 306"; 406, 406', 506, 506') étant couplé audit cadre support (10 ; 110 ; 210 ; 310, 310', 310" ; 401, 410', 410" ; 510, 510') et audit élément mobile (5 ; 105 ; 205 ; 305, 305', 305" ; 405' ; 505, 505') afin que ledit élément mobile (5 ; 105 ; 205 ; 305, 305', 305" ; 405' ; 505, 505') soit suspendu audit cadre support (10 ; 110 ; 210 ; 310, 310', 310" ; 401, 410', 410" ; 510, 510'), ladite première couche mince (20 ; 120 ; 220) étant posée sur ledit cadre support (10 ; 110 ; 210 ; 310, 310', 310" ; 401, 410', 410" ; 510, 510') et ledit élément mobile (5 ; 105 ; 205 ; 305, 305', 305" ; 405' ; 505, 505') de telle façon que ledit cadre support (10 ; 110 ; 210 ; 310, 310', 310" ; 401, 410', 410" ; 510, 510') et ledit élément mobile (5 ; 105 ; 205 ; 305, 305', 305" ; 405' ; 505, 505') sont formés en deux parties distinctes dudit substrat (100') semi-conducteur.

3. Organe de circulation fluidique (1B) selon la revendication 1 ou 2, **caractérisé en ce qu'**il comprend au moins un capteur (24) de mesure ou de détection intégré dans ledit diaphragme (6).

4. Organe de circulation fluidique (1B) selon l'une des revendications 1 à 3, **caractérisé en ce qu'**il comprend au moins un circuit électronique de commande ou de mesure, intégré dans ledit diaphragme (6).

5. Ensemble de circulation fluidique (1A ; 101A ; 201A ; 301A ; 401A ; 501A) **caractérisé en ce qu'**il comprend :
- au moins une embase (2 ; 102 ; 202 ; 302 ; 402 ; 502),
- au moins un organe de circulation fluidique (1B ; 101B ; 201B ; 301 B, 301'B, 301"B ; 401 B, 401'B, 401"B ; 501 B, 501'B) conforme à l'une quelconque des revendications 1 à 4, ledit cadre support (10 ; 110 ; 210 ; 310, 310' ; 310" ; 410, 410', 410" ; 510, 510') du ou de chaque organe de circulation fluidique (1B ; 101 B ; 201B ; 301 B, 301'B, 301"B ; 401 B, 401'B, 401"B ; 501 B, 501'B) reposant sur ladite embase (2 ; 102 ; 202 ; 302 ; 402 ; 502),
- au moins un volume intérieur (11, V100 ; V200) de circulation de fluide, chaque volume intérieur (11, V100 ; V200) étant défini par un organe de circulation fluidique (1B ; 101B ; 201B ; 301 B, 301'B, 301"B ; 401 B, 401'B, 401 "B ; 501 B, 501'B) et une embase (2 ; 102 ; 202 ; 302 ; 402 ; 502) correspondants, et
- au moins un orifice d'admission (14 ; 114 ; 214 ; 314₁, 314'₁, 314"₁; 414₁, 414'₁, 414"₁ ; 514₁, 514'₁) de fluide dans le volume intérieur, et au moins un orifice d'évacuation (3 ; 114 ; 214 ; 314₂, .314'₂, 314"₂ ; 414₂, 414'₂, 414"₂ ; 514₂, 503'); de fluide hors de ce volume intérieur.

6. Ensemble de circulation fluidique (1A ; 101A ; 201A ; 301A ; 401 A ; 501A) selon la revendication 5, **caractérisé en ce qu'**il comprend au moins un organe de circulation (1B ; 101B ; 201B ; 301B, 301 B', 301B" ; 401B, 401'B, 401"B ; 501 B, 501'B) selon la revendication 2, l'élément mobile (5 ; 105 ; 205 ; 305, 305', 305" ; 405' ; 505, 505') dudit organe de circulation fluidique (1 B ; 101B ; 201 B ; 301B, 301B', 301B" ; 401B, 401'B, 401"B ; 501 B, 501'B) étant propre à obturer, de façon sélective, au moins un premier orifice d'évacuation (3 ; 114 ; 214 ; 314₂, 314'2, 314"₂ ; 414₂, 414'₂, 414"₂ ; 514₂, 503').

7. Ensemble de circulation fluidique (1A ; 101A ; 201A ; 301A ; 401 A ; 501A) selon la revendication précédente **caractérisé en ce qu'**il comprend, outre le premier orifice d'évacuation (3 ; 114; 214 ; 314₂, 314'₂, 314"₂ ; 414₂, 414'₂, 414"₂ ; 514₂, 503') propre à être obturé par ledit élément mobile (5 ; 105 ; 205 ; 305, 305', 305" ; 405' ; 505, 505'), un second orifice d'admission (14 ; 114 ; 214 ; 314₁, 314'₁, 314"₁ ; 414₁, 414'₁, 414"₁ ; 514₁, 514'₁) qui n'est pas obturé par cet élément mobile (5 ; 105 ; 205 ; 305, 305', 305" ; 405' ; 505, 505').

8. Ensemble de circulation fluidique (1A ; 501A) selon l'une des revendications 5 à 7, **caractérisé en ce qu'**au moins un orifice d'évacuation (3 ; 503') présente une géométrie adaptée pour établir un sens d'écoulement privilégié de fluide.

9. Ensemble de circulation fluidique (1A ; 501A) selon la revendication précédente, **caractérisé en ce que** les dimensions transversales d'au moins un orifice d'évacuation (3 ; 503') varient le long de la direction d'écoulement du fluide.

10. Ensemble de circulation fluidique (301A ; 401A ; 501A) selon l'une des revendications 5 à 9, **caractérisé en ce qu'**il comprend plusieurs organes de circulation fluidique (301 B, 301'B, 301 "B ; 401 B, 401'B, 401 "B ; 501B, 501'B) définissant plusieurs volumes intérieurs, dont au moins deux sont placés en série, en référence à l'écoulement du fluide, l'orifice d'évacuation (314₂, 314'₂, 314"₂ ; 414₂, 414'₂, 414"₂ ; 514₂, 503') ou d'admission (314₁, 314'₁, 314"₁; 414₁, 414'₁, 414"₁ ; 514₁, 514'₁) d'un premier organe de circulation fluidique (301B, 301'B ; 401 B, 401'B ; 501B) débouchant dans, ou étant confondu avec, l'orifice d'évacuation ou d'admission d'au moins un organe de circulation fluidique (301'B, 301"B ; 401'B, 401"B ; 501'B) adjacent.

11. Ensemble de circulation fluidique (301A; 501A) selon la revendication précédente, **caractérisé en ce qu'**il comprend au moins deux organes de circulation fluidique ((301 B, 301'B, 301 "B ; 501B, 501'B) placés côte à côte d'un même côté de l'embase (302 ; 502), ces deux organes de circulation fluidique (301 B, 301'B, 301"B ; 501B, 501'B) ayant une partie de leur cadre support (310, 310', 310" ; 510, 510') en commun.

12. Ensemble de circulation fluidique (401A) selon la revendication 10, **caractérisé en ce qu'**il comprend au moins deux organes de circulation fluidique (401 B, 401'B, 401 "B) placés de part et d'autre de l'embase (402), les volumes intérieurs de ces deux organes de circulation fluidique (401B, 401'B, 401"B) étant mis en communication par un orifice d'évacuation/d'admission traversant (414₂/414'₁ ; 414'₂/414"₁) ménagé dans ladite embase (402), cet orifice traversant (414₂/414'1 ; 414'₂/414"₁) formant l'orifice d'admission ou d'évacuation du premier organe de circulation fluidique (401B, 401'B), ainsi que l'orifice d'évacuation ou d'admission de l'organe de circulation adjacent fluidique (401'B, 401 "B),

13. Ensemble de circulation fluidique (301A; 401A) selon l'une des revendications 10 à 12, **caractérisé en ce qu'**il comprend, dans le sens d'écoulement du fluide, un organe de circulation fluidique (301B ; 401 B) amont conforme à la revendication 2, un organe de circulation fluidique (301'B ; 401'B) intermédiaire et un organe de circulation fluidique 301"B ; 401"B) aval conforme à la revendication 2.

14. Ensemble de circulation fluidique selon l'une des revendications 5 à 13, **caractérisé en ce qu'**il comprend au moins une butée à l'égard du déplacement, dans au moins un sens, du diaphragme appartenant à au moins un organe de circulation fluidique.

15. Dispositif médical d'injection et/ou de prélèvement **caractérisé en ce qu'**il comprend au moins un organe de circulation fluidique (1B ; 101B ; 201B ; 301B, 301B', 301B" ; 401 B, 401'B, 401"B ; 501 B, 501'B) selon l'une des revendications 1 à 4, et/ou au moins un ensemble de circulation fluidique (1A ; 101A ; 201A ; 301A ; 401A ; 501A) selon l'une des revendications 5 à 14.

## Claims

1. Fluidic circulation member (1B ; 101B ; 201B ; 301B ; 301B' ; 301B" ; 401B ; 401'B ; 401"B ; 501B ; 501'B) in a heat-actuated semiconductor substrate (100'), comprising a supporting frame (10; 110 ; 210 ; 310 ; 310' ; 310" ; 401 ; 410' ; 410" ; 510 ; 510') and a bi-morphous diaphragm (6 ; 106 ; 206 ; 306 ; 306' ; 306" ; 406 ; 406' ; 506 ; 506') into two stacked parts (7 ; 8 ; 107 ; 108 ; 207 ; 208) which is coupled to the supporting frame (10 ; 110 ; 210 ; 310 ; 310' ; 310" ; 401 ; 410' ; 410" ; 510 ; 510'), **characterized in that** a first thin layer (20 ; 120 ; 220), made of a stopping material for said semiconductor substrate (100') selective attack, is placed on said supporting frame (10 ; 110 ; 210 ; 310 ; 310' ; 310" ; 401 ; 410' ; 410" ; 510; 510') and **in that** said diaphragm (6 ; 106; 206 ; 306 ; 306' ; 306" ; 406 ; 406' ; 506 ; 506') made of two parts (7 ; 8 ; 107 ; 108 ; 207 ; 208) is placed on a single surface of said first thin layer (20 ; 120 ; 220).

2. Fluidic circulation member (1B ; 101B ; 201 ; 301B ; 301B'; 301B" ; 401B ; 401'B ; 401"B; 501B ; 501'B) according to the claim 1, **characterized in that** it further comprises a movable member (5 ; 105 ; 205 ; 305; 305' ; 305", 405' ; 505 ; 505'), said diaphragm (6; 106; 206 ; 306 ; 306' ; 306" ; 406; 406' ; 506 ; 506') being coupled to said supporting frame (10 ; 110 ; 210 ; 310 ; 310' ; 310" ; 401 ; 410' ; 410" ; 510 ; 510') and to said movable member (5 ; 105 ; 205 ; 305 ; 305' ; 305", 405' ; 505 ; 505') so that said movable member (5 ; 105 ; 205 ; 305 ; 305' ; 305", 405' ; 505 ; 505') is suspended to said supporting frame (10; 110 ; 210; 310; 310' ; 310" ; 401; 410' ; 410" ; 510; 510'), said first thin layer (20 ; 120 ; 220) being placed on said supporting frame (10 ; 110 ; 210 ; 310 ; 310' ; 310" ; 401 ; 410' ; 410" ; 510 ; 510') and said movable member (5 ; 105 ; 205 ; 305 ; 305' ; 305", 405' ; 505 ; 505') in such a way said supporting frame (10 ; 110 ; 210 ; 310 ; 310' ; 310" ; 401 ; 410' ; 410" ; 510 ; 510') and said movable member (5 ; 105 ; 205 ; 305 ; 305' ; 305", 405' ; 505 ; 505') are formed in two distinctive parts of said semiconductor substrate (100').

3. Fluidic circulation member (1B) according to the claim 1 or 2, **characterized in that** it comprises at least a measuring or detecting sensor (24) integrated in said diaphragm (6).

4. Fluidic circulation member (1B) according to one of the claims 1 to 3, **characterized in that** it comprises at least an electronic control or measure circuit integrated in said diaphragm (6).

5. Fluidic circulation unit (1A ; 101A ; 201A ; 301A ; 401A ; 501A) **characterized in that** it comprises :
- at least a base (2 ; 102 ; 202 ; 302 ; 402 ; 502),
- at least a fluidic circulation member (1B ; 101B ; 201B ; 301B ; 301'B ; 301"B ; 401B ; 401'B ; 401"B; 501B ; 501'B) according to any of the claims 1 to 5, said supporting frame (10 ; 110; 210 ; 310 ; 310' ; 310" ; 401 ; 410' ; 410" ; 510 ; 510') of the or each fluidic circulation member (1B ; 101B ; 201B ; 301B ; 301'B ; 301"B ; 401B ; 401'B ; 401"B ; 501B ; 501'B) based on the corresponding base (2 ; 102 ; 202 ; 302 ; 402 ;502),
- at least a inner volume (11 ; V100 ; V200) for fluid circulation, each inner volume (11 ; V100 ; V200) being defined by corresponding fluidic circulation member (1B ; 101B ; 201B ; 301B ; 301'B; 301"B ; 401B ; 401'B ; 401"B ; 501B ; 501'B) and base (2 ; 102 ; 202 ; 302; 402 ;502), and
- at least a fluid inlet hole (14 ; 114 ; 214 ; 314₁ ; 314'₁; 314"₁ ; 414₁ ; 414'₁ ; 414"₁ ; 514₁ ; 514'₁) in the inner volume, and at least a fluid outlet hole (3 ; 114 ; 214 ; 314₂ ; 314'₂ ; 314"₂ ; 414₂ ; 414'₂; 414"₂; 514₂; 503') outside said inner volume.

6. Fluidic circulation unit (1A ; 101A ; 201A ; 301A ; 401A ; 501A) according to the claim 5, **characterized in that** it comprises at least a fluidic circulation member (1B ; 101B ; 201B ; 301B ; 301B' ; 301B" ; 401B ; 401'B ; 401B" ; 501B ; 501'B) according the claim 2, the movable member (5 ; 105 ; 205 ; 305 ; 305' ; 305", 405' ; 505 ; 505') of said fluidic circulation member (1B ; 101B ; 201B ; 301B ; 301B' ; 301B" ; 401B ; 401'B ; 401B" ; 501B ; 501'B) being designed to close, in a selective manner, at least a first fluid outlet hole (3 ; 114 ; 214 ; 314₂ ; 314'₂ ; 314"₂ ; 414₂ ; 414'₂ ; 414"₂ ; 514₂; 503').

7. Fluidic circulation unit (1A ; 101A ; 201A ; 301A ; 401A ; 501A) according to the preceding claim **characterized in that** it comprises, further the first fluid outlet hole (3 ; 114 ; 214 ; 314₂ ; 314'₂ ; 314"₂ ; 414₂ ; 414'₂ ; 414"₂ ; 514₂ ; 503') designed to be closed by said movable member (5 ; 105 ; 205 ; 305 ; 305' ; 305", 405' ; 505 ; 505'), a second inlet hole (14 ; 114 ; 214 ; 314₁ ; 314'₁ ; 314"₁ ; 414₁ ; 414'₁ ; 414"₁ ; 514₁ ; 514'₁) which is not closed by said movable member (5 ; 105 ; 205 ; 305 ; 305' ; 305", 405' ; 505 ; 505').

8. Fluidic circulation unit (1A ; 501A) according to any of claims 5 to 7, **characterized in that** at least one outlet hole (3 ; 503') has an adapted geometry to establish a preferred fluid flow direction.

9. Fluidic circulation unit (1A ; 501A) according to the preceding claim, **characterized in that** the transverse dimensions from at least one outlet hole (3 ; 503') vary along the fluid flow direction.

10. Fluidic circulation unit (301A ; 401A ; 501A) according to any of claims 5 to 9, **characterized in that** it comprises several fluidic circulation member (301B; 301'B ; 301"B ; 401B ; 401'B ; 401"B ; 501B ; 501'B) defining several inner volumes, including at least two in series, in reference to fluid flow, the outlet hole (314₂, 314'₂ ; 314"₂ ; 414₂ ; 414'₂ ; 414"₂ ; 514₂ ; 503') or the inlet hole (314₁ ; 314'₁ ; 314"₁ ; 414₁ ; 414'₁ ; 414"₁ ; 514₁ ; 514'₁) of a first fluidic circulation member (301B ; 301'B ; 401B ; 401'B ; 501B) leading to or being merged with, the outlet or inlet hole from at least one adjacent fluidic circulation member (301'B; 301"B; 401'B; 401"B; 501'B).

11. Fluidic circulation unit (301A ; 501A) according to the preceding claim, **characterized in that** it comprises at least two fluidic circulation members (301B ; 301'B ; 301"B ; 501B ; 501'B) placed side by side in a same side of the base (302 ; 502), those two fluidic circulation members (301B ; 301'B ; 301"B ; 501B ; 501'B) sharing one part of their supporting frame (310; 310' ; 310" ; 510; 510').

12. Fluidic circulation unit (401A) according to the claim 10, **characterized in that** it comprises at least two fluidic circulation members (401B ; 401'B ; 401"B) placed on either side of the base (402), the inner volumes of both fluidic circulation members (401B ; 401'B ; 401"B) communicating through a traversing outlet/inlet hole (414₂/414'₁ ; 414'₂/414"₁) provided into said base (402), this traversing hole (414₂/414'₁ ; 414'₂/414"₁) forming the inlet or outlet hole of the first fluidic circulation member (401B; 401'B), and the outlet or inlet hole of the adjacent fluidic circulation member (401'B ; 401"B).

13. Fluidic circulation unit (301A ; 401A) according to any of the preceding claims 10 to 12, **characterized in that** it comprises, in the fluid flow direction, an upstream fluidic circulation member (301B ; 401B) according to the claim 2, an intermediate fluidic circulation member (301'B ; 401'B) and a downstream fluidic circulation member (301"B ; 401"B) according to the claim 2.

14. Fluidic circulation unit according to any of the claims 5 to 13, **characterized in that** it comprises at least a movement abutment, in at least one direction, of the diaphragm belonging at least at one fluidic circulation member.

15. Medical device of injection and/or of sampling **characterized in that** it comprises at least a fluidic circulation member (1B ; 101B ; 201B ; 301B; 301B' ; 301B" ; 401B ; 401'B ; 401"B ; 501B ; 501'B) according to one of the claims 1 to 4, and/or at least a fluidic circulation unit (1A ; 101A ; 201A ; 301A ; 401A; 501A) according to one of the claims 5 to 14.

## Patentansprüche

1. Fluidzirkulationsorgan (1B; 101B; 201B; 301B, 301B', 301B"; 401B, 401'B, 401"B; 501B, 501'B) auf einem Halbleitersubstrat (100') mit thermischer Betätigung, das einen Tragrahmen (10; 110; 210; 310, 310', 310"; 410, 410', 410"; 510; 510') und eine bimorphe Membran (6; 106; 206; 306, 306', 306"; 406, 406'; 506, 506') aus zwei übereinanderliegenden Teilen (7; 8; 107, 108; 207, 208) umfasst, die an den Tragrahmen (10; 110; 210; 310, 310', 310"; 410, 410', 410"; 510, 510') gekoppelt ist, **dadurch gekennzeichnet, dass** eine erste dünne Schicht (20; 120; 220) aus einem Barrierematerial für eine selektive Ätzung des Halbleitersubstrats (100') auf dem Tragrahmen (10; 110; 210; 310, 310', 310"; 410, 410', 410"; 510, 510') angebracht ist und dass die Membran (6; 106; 206; 306, 306', 306"; 406, 406'; 506, 506') aus zwei Teilen (7, 8; 107, 108; 207, 208) auf einer selben Seite der ersten dünnen Schicht (20; 120; 220) angebracht ist.

2. Fluidzirkulationsorgan (1B; 101B; 201B; 301B, 301B', 301B"; 401B, 401'B, 401 "B; 501 B, 501'B) nach Anspruch 1, **dadurch gekennzeichnet, dass** es ferner ein bewegliches Element (5; 105; 205; 305, 305', 305"; 405'; 505, 505') umfasst, wobei die Membran (6; 106; 206; 306, 306', 306"; 406, 406'; 506, 506') an den Tragrahmen (10; 110; 210; 310, 310', 310"; 410, 410', 410"; 510, 510') und an das bewegliche Element (5; 105; 205; 305, 305', 305"; 405'; 505, 505') gekoppelt ist, damit das bewegliche Element (5; 105; 205; 305, 305', 305"; 405'; 505, 505') an dem Tragrahmen (10; 110; 210; 310, 310', 310"; 410, 410', 410"; 510, 510') aufgehängt ist, wobei die erste dünne Schicht (20; 120; 220) derart an dem Tragrahmen (10; 110; 210; 310, 310', 310"; 410, 410', 410"; 510, 510') und dem beweglichen Element (5; 105; 205; 305, 305', 305"; 405'; 505, 505') angebracht ist, dass der Tragrahmen (10; 110; 210; 310, 310', 310"; 401, 410', 410"; 510, 510') und das bewegliche Element (5; 105; 205; 305, 305', 305"; 405'; 505, 505') aus zwei getrennten Teilen des Halbleitersubstrats (100') gebildet sind.

3. Fluidzirkulationsorgan (1B) nach Anspruch 1 oder 2, **dadurch gekennzeichnet, dass** es mindestens einen Mess- oder Detektionssensor (24) umfasst, der in die Membran (6) integriert ist.

4. Fluidzirkulationsorgan (1B) nach einem der Ansprüche 1 bis 3, **dadurch gekennzeichnet, dass** es mindestens eine elektronische Steuer- oder Messschaltung umfasst, die in die Membran (6) integriert ist.

5. Fluidzirkulationsbaugruppe (1A; 101A; 201A; 301A; 401A; 501A), **dadurch gekennzeichnet, dass** sie Folgendes umfasst:
- mindestens einen Sockel (2; 102; 202; 302; 402; 502),
- mindestens ein Fluidzirkulationsorgan (1B; 101B; 201B; 301B, 301 B', 301 B"; 401 B, 401'B, 401 "B; 501B, 501'B) nach einem der Ansprüche 1 bis 4, wobei der Tragrahmen (10; 110; 210; 310, 310', 310"; 410, 410', 410"; 510, 510') des oder jedes Fluidzirkulationsorgans (1B; 101B; 201B; 301B, 301B', 301B"; 401B, 401'B, 401 "B; 501B, 501'B) auf dem Sockel (2; 102; 202; 302; 402; 502) aufliegt,
- mindestens einen Innenraum (11; V100; V200) zur Fluidzirkulation, wobei jeder Innenraum (11; V100; V200) durch ein entsprechendes Fluidzirkulationsorgan (1B; 101B; 201B; 301B, 301B', 301B"; 401B, 401'B, 401"B; 501B, 501'B) und einen entsprechenden Sockel (2; 102; 202; 302; 402; 502) definiert ist und
- mindestens eine Öffnung (14; 114; 214; 314₁, 314'₁, 314"₁; 414₁, 414'₁, 414"₁; 514₁, 514'₁) für den Einlass von Fluid in den Innenraum und mindestens eine Öffnung (3; 114; 214; 314₂, 314'₂, 314"₂; 414₂, 414'₂, 414"₂; 514₂, 503') für den Auslass von Fluid aus diesem Innenraum.

6. Fluidzirkulationsbaugruppe (1A; 101A; 201A; 301A; 401A; 501A) nach Anspruch 5, **dadurch gekennzeichnet, dass** sie mindestens ein Zirkulationsorgan (1B; 101B; 201B; 301B, 301B', 301B"; 401B, 401'B, 401"B; 501B, 501'B) nach Anspruch 2 umfasst, wobei das bewegliche Element (5; 105; 205; 305, 305', 305"; 405'; 505, 505') des Fluidzirkulationsorgans (1B; 101B; 201B; 301B, 301B', 301B"; 401B, 401'B, 401"B; 501B, 501'B) geeignet ist, um mindestens eine erste Auslassöffnung (3; 114; 214; 314₂, 314'₂, 314"₂; 414₂, 414'₂, 414"₂; 514₂, 503') auf selektive Art und Weise zu verschließen.

7. Fluidzirkulationsbaugruppe (1A; 101A; 201A; 301A; 401A; 501A) nach dem vorhergehenden Anspruch, **dadurch gekennzeichnet, dass** sie neben der ersten Auslassöffnung (3; 114; 214; 314₂, 314'₂, 314"₂; 414₂, 414'₂, 414"₂; 514₂, 503'), die geeignet ist, um durch das bewegliche Element (5; 105; 205; 305, 305', 305"; 405'; 505, 505') verschlossen zu werden, eine zweite Einlassöffnung (14; 114; 214; 314₁, 314'₁, 314"₁; 414₁, 414'₁, 414"₁; 514₁, 514'₁) umfasst, die nicht durch dieses bewegliche Element (5; 105; 205; 305, 305', 305"; 405'; 505, 505') verschlossen wird.

8. Fluidzirkulationsbaugruppe (1A; 501A) nach einem der Ansprüche 5 bis 7, **dadurch gekennzeichnet, dass** mindestens eine Auslassöffnung (3; 530') eine Geometrie aufweist, die angepasst ist, um eine bevorzugte Fluidströmungsrichtung herzustellen.

9. Fluidzirkulationsbaugruppe (1A; 501A) nach dem vorhergehenden Anspruch, **dadurch gekennzeichnet, dass** die Querabmessungen von mindestens einer Auslassöffnung (3; 503') entlang der Strömungsrichtung des Fluids variieren.

10. Fluidzirkulationsbaugruppe (301A; 401A; 501A) nach einem der Ansprüche 5 bis 9, **dadurch gekennzeichnet, dass** sie mehrere Fluidzirkulationsorgane (301B, 301 B', 301B"; 401B, 401'B, 401"B; 501B, 501'B) umfasst, die mehrere Innenräume definieren, von denen mindestens zwei in Bezug auf die Strömung des Fluids in Reihe angeordnet sind, wobei die Auslass- (314₂, 314'₂, 314"₂; 414₂, 414'₂, 414"₂; 514₂, 503') oder die Einlassöffnung (314₁, 314'₁, 314"₁; 414₁, 414'₁, 414"₁; 514₁, 514'₁) eines ersten Fluidzirkulationsorgans (301B, 301B'; 401B, 401'B; 501B) in die Auslass- oder Einlassöffnung von mindestens einem benachbarten Fluidzirkulationsorgan (301'B, 301"B; 401'B, 401"B; 501'B) mündet oder diese ineinander übergehen.

11. Fluidzirkulationsbaugruppe (301A; 501A) nach dem vorhergehenden Anspruch, **dadurch gekennzeichnet, dass** sie mindestens zwei Fluidzirkulationsorgane (301B, 301B', 301B"; 501B, 501'B) umfasst, die auf einer selben Seite des Sockels (302; 502) Seite an Seite platziert sind, wobei diese zwei Fluidzirkulationsorgane (301B, 301'B, 301 "B; 501B, 501'B) einen Teil ihres Tragrahmens (310, 310', 310"; 510, 510') gemeinsam haben.

12. Fluidzirkulationsbaugruppe (401A) nach Anspruch 10, **dadurch gekennzeichnet, dass** sie mindestens zwei Fluidzirkulationsorgane (401B, 401'B, 401"B) umfasst, die auf beiden Seiten des Sockels (402) platziert sind, wobei die Innenräume dieser zwei Fluidzirkulationsorgane (401B, 401'B, 401"B) durch eine durchgehende Auslass/Einlassöffnung (414₂/414'₁, 414'₂/414"₁) in Verbindung gesetzt sind, die in dem Sockel (402) eingerichtet ist, wobei diese durchgehende Öffnung (414₂/414'₁, 414'₂/414"₁) die Einlass- oder Auslassöffnung des ersten Fluidzirkulationsorgans (401B, 401'B) sowie die Auslass- oder Einlassöffnung des benachbarten Fluidzirkulationsorgans (401'B, 401"B) bildet.

13. Fluidzirkulationsbaugruppe (301A; 401A) nach einem der Ansprüche 10 bis 12, **dadurch gekennzeichnet, dass** sie in der Strömungsrichtung des Fluids ein stromaufwärts gelegenes Fluidzirkulationsorgan (301 B; 401B) nach Anspruch 2, ein Zwischen-Fluidzirkulationsorgan (301'B; 401'B) und ein stromabwärts gelegenes Fluidzirkulationsorgan (301"B; 401"B) nach Anspruch 2 umfasst.

14. Fluidzirkulationsbaugruppe nach einem der Ansprüche 5 bis 13, **dadurch gekennzeichnet, dass** sie mindestens einen Anschlag gegenüber einer Verschiebung der Membran in mindestens eine Richtung umfasst, die zu mindestens einem Fluidzirkulationsorgan gehört.

15. Medizinische Vorrichtung zur Injektion und/oder Abnahme, **dadurch gekennzeichnet, dass** sie mindestens ein Fluidzirkulationsorgan (1B; 101B; 201B; 301B, 301B', 301B"; 401B, 401'B, 401"B; 501B, 501'B) nach einem der Ansprüche 1 bis 4 und/oder mindestens ein Fluidzirkulationsorgan (1A; 101A; 201A; 301A; 401A; 501A) nach einem der Ansprüche 5 bis 14 umfasst.
